# EUROPÄISCHE PATENTSCHRIFT

(11) **EP 1 151 974 B1**
(45) Veröffentlichungstag und Bekanntmachung des Hinweises auf die Patenterteilung: **03.03.2004**
(21) Anmeldenummer: 01250146.6
(22) Anmeldetag: 26.04.2001
(51) Int. Cl.: C04B 38/00, C04B 41/87, B01D 71/02

(54) **Oxidkeramischer Körper mit ultrafeinen Poren, Verfahren zu seiner Herstellung und Verwendung**
Ceramic oxide products with ultrafine pores, process for manufacturing and their use
Objects en céramique d'oxydes avec des pores ultrafines, procédé de fabrication et leur utilisation

(30) Priorität: 27.04.2000 DE 10021580
(43) Veröffentlichungstag der Anmeldung: 07.11.2001
(73) Patentinhaber: Institut für Angewandte Chemie Berlin-Adlershof E.V., 12489 Berlin (DE)
(72) Erfinder: Noack, Manfred, 12683 Berlin (DE); Kölsch, Peter, 10367 Berlin (DE); Toussaint, Petra, 12489 Berlin (DE); Caro, Jürgen, 13129 Berlin (DE); Schäfer, Ronald, 12487 Berlin (DE)
(74) Vertreter: Walter, Wolf-Jürgen

(56) Entgegenhaltungen:
- DE VOS R M ET AL: "Hydrophobic silica membranes for gas separation" JOURNAL OF MEMBRANE SCIENCE, ELSEVIER SCIENCE, AMSTERDAM, NL, Bd. 158, Nr. 1-2, 1. Juni 1999 (1999-06-01), Seiten 277-288, XP004166244 ISSN: 0376-7388
- PATENT ABSTRACTS OF JAPAN vol. 008, no. 093 (C-220), 27. April 1984 (1984-04-27) & JP 59 010306 A (MITSUBISHI JUKOGYO KK), 19. Januar 1984 (1984-01-19)

## Beschreibung

Die Erfindung betrifft oxidkeramische Körper mit ultrafeinen Poren, an denen Stoffgemische durch Pervaporation und Permeation getrennt werden können sowie ein Herstellungsverfahren derartiger Körper.

Gegenwärtig wird technisch die Präparation von Ultrafiltrationsmembranen mit Porendurchmessern von größer 5 nm beherrscht. An diesen Filtern können Kolloide, Stäube, Mikroorganismen oder Makromoleküle von >1000 Dalton mit einem Rückhalt > 95% abgetrennt werden. Diese keramischen Filtermembranen besitzen aber zu große Porendurchmesser, um gasförmige oder flüssige Gemische in die Komponenten aufzutrennen.

In den letzten Jahren wurden eine Vielzahl von Techniken eingesetzt, um UF-Keramiken so nachzubehandeln, daß molekular trennende Membranen erhalten werden. Hierzu zählen z.B. der Aufbau feinporiger Schichten durch Auftrag von Polymersolen (de Vos, R., Verweij, H.- Science, (1998) 279, 1710); die Aufkristallisation von Zeolithschichten (Tavolaro, A.- Drioli, E.- Adv. Mater. (1999) 11, 975) oder CVD/PVD-Beschichtungen (Nijmeiier, A.; Bladergroen, B.J.; Verweij, H.: Microp. Mesop. Mater. (1998) 25, 179). Die Herstellung von molekular trennenden Membranen nach diesen Prinzipien ist technologisch aufwendig, wegen der Vielstufigkeit der Präparationsschritte anfällig für Defekte und kostenintensiv, da teure Ausgangschemikalien eingesetzt werden und teils unter Reinstraumbedingungen gearbeitet werden muß.

Es ist bekannt, daß durch eine kontinuierliche thermische Zersetzung von TEOS durch Reaktion mit Wasser oder Sauerstoff die Poren eines grobporösen keramischen Körpers zwar verengt, aber nicht hydrophil funktionalisiert werden können (Moorooka, S.; J. Membr. Sci. 101 (1995) 89). Nach der DE 19722902 A1 können durch eine TEOS-Behandlung poröse, feste, anorganische Körper mit modifizierter Oberfläche erhalten werden. Nach der genannten Patentanmeldung führt jedoch erst eine 5- bis 7-fache Wiederholung zu einer molekularen Trennwirkung.

Der Erfindung liegt die Aufgabe zugrunde, auf Basis poröser Keramiksubstrate neue molekular trennende Membranen mit ultrafeinen Poren zu entwickeln.

Die Aufgabe wird gelöst mit einem oxidkeramischen Körper mit ultrafeinen Poren, der ein innerhalb der Oberflächenporen des oxidkeramischen Körpers gleichmäßig abgeschiedenes Metalloxid-Netzwerk hat, das die Keramikporen zugleich verengt und hydrophiliert.

Erfindungsgemäß bereitgestellt wird daher ein oxidkeramischer Körper mit ultrafeinen Poren, der gekennzeichnet ist durch einen offenporigen, festen, oxidkeramischen Grundkörper mit asymmetrischem Schichtaufbau, auf der Funktionsseite mit den feinsten Poren mit Größen von 1 nm bis 20 nm in der oberflächennächsten Schicht, und ein gleichmäßig in den Poren der oberflächennächsten Schicht verteiltes metalloxidhaltiges Material, das die Poren auf Porengrößen im Bereich von 0,3 bis 0,8 nm einengt und die Porenoberflächen funktionalisiert.

Unter dem Begriff "asymmetrischer Schichtaufbau" wird ein Aufbau verstanden, der ausgehend vom grobporigen Grundkörper eine zu einer Seite hin abnehmende Porengröße hat, so daß die Poren an der Oberfläche der äußersten Schicht einer Seite den kleinsten Durchmesser aufweisen. Diese äußerste Schicht wird als "oberflächennächste Schicht" bezeichnet. Die Schicht kann eine Schichtdicke von etwa 10 bis etwa 1000 nm haben.

"Funktionsseite des Körpers" ist die Seite des Grundkörpers, die die feinporigste Schicht aufweist. Die Funktionsseite kann dem Feed oder dem Permeat einer zu trennenden Flüssigkeit oder einem zu trennenden Gasgemisch oder einem zu trennendem Gas/Flüssigkeitsgemisch zugewandt sein. "Funktionalisiert" im Sinne der Erfindung werden die Porenoberflächen, indem ihnen eine starke Hydrophilität verliehen wird, d.h. eine andere Wechselwirkungseigenschaft mit einem Permeat im Verhältnis zu den unbehandelten Poren.

Der Grundkörper besteht allgemein aus einem keramischen Material auf Basis von Aluminiumoxid, Siliciumdioxid, Zirkoniumoxid, Titaniumoxid oder entsprechenden Oxidgemischen.

Das metalloxidhaltige Material, das in den Poren des Oberflächenbereiches der oberflächennächsten Schicht abgeschieden wird, besteht aus einem Netzwerk der Oxide von Aluminium, Titanium, Silicium, Germanium oder Zirkonium, das reich an MeOH-Funktionen ist. Vorzugsweise ist das metalloxidhaltige Material ein Siliciumoxid-Netzwerk mit SiOH-Funktionen. Es kann dabei nicht ausgeschlossen werden, daß organische Restgruppen enthalten sind entsprechend den gewählten Verfahrensbedingungen.

Bevorzugte Ausführungsformen des erfindungsgemäßen oxidkeramischen Körpers sind ein flacher Körper, ein Rohr oder ein Multikanalrohr, bei dem die Funktionsseite jeweils die feinste Schicht des asymmetrischen Schichtaufbaus aufweist.

Eine bevorzugte Porengröße im Oberflächenbereich der oberflächennächsten Schicht liegt bei 0,4 - 0,5 nm. Die abgelagerten Metalloxidnetzwerke engen die Poren der oberflächennächsten Schicht soweit gleichmäßig ein, daß eine Stofftrennung über derartige Trennkörper entsprechend den Molekülgrößen nahezu vollständig erfolgt und keine signifikanten Mengen der abzutrennenden Moleküle von z.B. > 0,4 oder > 0,5 nm den Formkörper passieren.

Der erfindungsgemäße oxidkeramische Körper mit funktionalisierten Poren wird hergestellt durch ein- oder mehrfache Behandlung des bei Raumtemperatur mit Wasserdampf gesättigten oxidkeramischen Körpers mit einer hydrolysierbaren siliciumorganischen Verbindung in einem Autoklav bei 150 bis 450 °C, vorzugsweise, 250 °C für 1 bis 8h, vorzugsweise 2 h.

Gegenstand der Erfindung ist daher auch ein Verfahren zur Herstellung eines oxidkeramischen Körpers mit ultrafeinen Poren, dadurch gekennzeichnet, daß man einen offenporigen, festen, oxidkeramischen Grundkörper mit asymmetrischem Schichtaufbau, der auf der Funktionsseite die feinsten Poren aufweist mit Porengrößen von 1 nm bis 20 nm in der oberflächennächsten Schicht, und der bei Raumtemperatur wassergesättigt ist, in Gegenwart einer flüssigen oder gasförmigen metallorganischen Verbindung, ausgewählt unter den organischen Verbindungen der Metalle Al, Ti, Ge, Zr und Si, in einem Autoklaven bei Temperaturen im Bereich von 150 bis 450 °C und autogenem Druck über einen Zeitraum von 1 bis 18 Stunden behandelt.

Im Unterschied zum Stand der Technik erfolgt durch die Verwendung eines Autoklaven die Ausbildung eines überraschend gleichmäßigen siliciumoxid- bzw. Metalloxidnetzwerkes innerhalb der Poren des oxidkeramischen porösen Körpers infolge der Zersetzung der metallorganischen Verbindung, z.B. von Tetraethylorthosilicat (TEOS) oder einer anderen silicium- oder metallorganischen Verbindung im oxidkeramischen Körper unter ihrem eigenen Dampfdruck bei Temperaturen zwischen 150 und 450 °C durch Reaktion mit dem Wasserdampf aus den Poren des zuvor bei Raumtemperatur wasserdampfgesättigten oxidkeramischen porösen Körpers.

Vorteilhaft wird der Grundkörper nach der Wassersättigung wenigstens auf der feinporigen Funktionsseite mit einer Lösung der metallorganischen Verbindung in Kontakt gebracht. Speziell kann daher vor der Autoklavbehandlung der wassergesättigte Träger mit einer TEOS-Ethanol Lösung 1:1 an der Funktionsschicht getränkt werden, so daß das Wasser mit dem TEOS bei Temperaturerhöhung direkt reagieren kann.

Der oxidkeramische Grundkörper kann eine kommerziell verfügbare, keramische Mikro- oder Ultrafiltrationsmembran, bestehend aus Al₂O₃, SiO₂, ZrO₂, TiO₂ oder ähnlichen Oxiden oder Gemischen davon sein, die ein mikroporöses und offenporiges Gefüge besitzen.

Der oxidkeramische, offenporige Grundkörper wird vor der erfindungsgemäßen Behandlung bei 500 °C in Luft über 24 h calciniert und danach über 24 h im Exsiccator bei Raumtemperatur einer gesättigten Wasserdampfatmosphäre ausgesetzt. Es erfolgt eine Füllung der Mikroporen der Keramik mit Wasser durch Kapillarkondensation. Die Gewichtsaufnahme beträgt bis zu 1 Gew-%. Anschließend wird der oxidkeramische, offenporige Ausgangskörper mit einer alkoholischen Lösung einer metallorganischen Verbindung wie z.B. TEOS in Ethanol oder einem anderen Lösungsmittel durch Tauchen oder Beschichten mit den Arbeitstechniken dip coating oder spin coating in Kontakt gebracht.

Die metallorganische Verbindung dringt in das Porensystem der Funktionsschicht ein. Nach Abdunsten des Lösungsmittels und einer Reaktionszeit von beispielsweise 20 min ist eine Massezunahme von bis zu 15% zu verzeichnen. Nun wird die TEOS-haltige grobporige Ausgangskeramik zusammen mit der reinen unverdünnten flüssigen metallorganischen Verbindung in einen Autoklaven eingebracht. Die Masse der zuzugebenden metallorganischen Komponente wird auf das Volumen des Autoklaven so eingestellt, daß sich bei einer Reaktionstemperatur von 250 °C ein Druck von 1,75 bar einstellt.

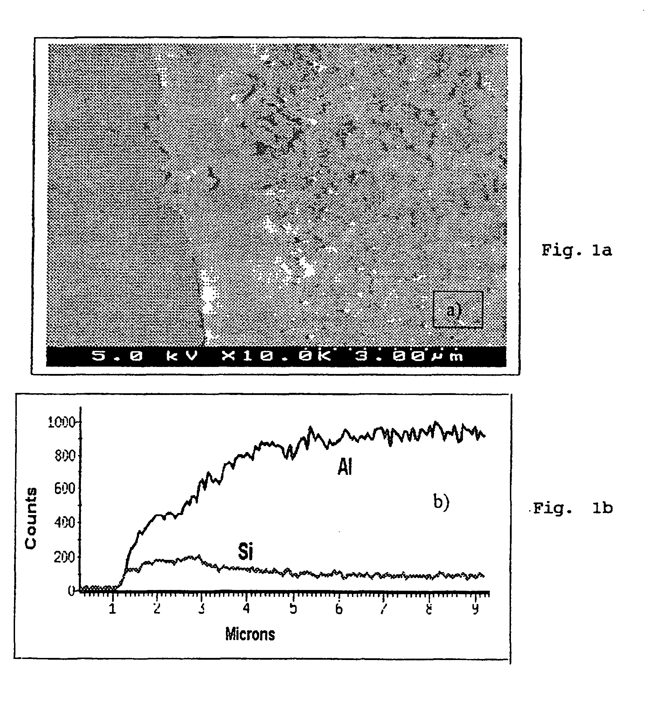

Während der Autoklavbehandlung steht die gegebenenfalls eingesetzte flüssige metallorganische Verbindung nicht in direktem Kontakt mit dem oxidkeramischen Grundkörper. Die zu funktionalisierende Keramik taucht daher nicht direkt in eine flüssige metallorganische Verbindung ein, sondern befindet sich z.B. in einem Gestell über der metallorganischen Verbindung wie z.B. TEOS. Der Autoklav wird mit 10 °C pro Minute auf 250 °C aufgeheizt und bei dieser Temperatur 2 Stunden belassen. Nach dem Abkühlen und öffnen des Autoklaven wird gravimetrisch eine Gewichtszunahme der Ausgangsmembran um ca. 2 Gew-% SiO₂ festgestellt. Die energiedispersive Röntgenspektroskopie (EDX) in Verbindung mit der Rasterelektronenmikroskopie (REM) zeigt gemäß Fig. 1, daß sich das abgeschiedene Siliciumoxid-Netzwerk gleichmäßig über die γ-Al₂O₃-Schicht der Membran verteilt hat. In Pervaporationsexperimenten von Gemischen aus Wasser und verschiedenen organischen Lösungsmitteln zeigt sich, daß aus diesen Gemischen mit hoher Selektivität und hoher Flußdichte das Wasser durch Pervaporation abgetrennt werden kann (Tab.2). Dieses hydrophile Trennverhalten der Membran beruht darauf, daß die ausgebildete Siliciumoxid-Schicht reich an SiOH-Gruppen ist. Durch Variation der Reaktionsparameter kann eine Porengröße von 0,4 bis 0,5 nm eingestellt werden.

Die erfindungsgemäße Behandlung im Autoklaven kann zwei- oder dreimal erfolgen, wobei jedoch eine ein- bis zweimalige Behandlung bevorzugt ist.

Der erfindungsgemäße oxidkeramische Körper kann als Trennmembran für Flüssigkeiten oder Dämpfe verwendet werden. Der erfindungsgemäße Einsatz für Permeation oder Pervaporation kann wegen der Hydrophilie des Körpers insbesondere zur Abtrennung kleiner und polarer Moleküle wie Wasser oder Methanol genutzt werden.

Die Membran ist lösungsmittelstabil und thermisch bis 250 °C belastbar.

Die Trennwirkung der erfindungsgemäßen Membran für Gase und Dämpfe unterschiedlicher Molekülgröße wird in den folgenden Anwendungsbeispielen angegeben.

Die dazugehörige Zeichnung zeigt in
Fig. 1a ein rasterelektronenmikroskopisches Bild der Bruchkante der erfindungsgemäß präparierten Membran.
Fig. 1b Verteilung der Elemente Si und Al über die Bruchkante einer erfindungsgemäß mit TEOS behandelten Membran gemäß den energiedispersiven Röntgenspektren von si und Al.

### Beispiel 1

Eine keramische Flachmembran mit schichtaufbau wird erfindungsgemäß mit TEOS behandelt. Die Schichtenabfolge der Membran ist in nachfolgender Tabelle beschrieben.

**Tabelle 3**

| | Beschreibung | Schichtdicke µm | d₅₀-Wert* [nm] | Material |
|---|---|---|---|---|
| Grundkörper | Träger | ca. 1000 | 3000 | α-Al₂O₃ |
| 1. Mikrofiltrations-Schicht (MF) | Zwischenschicht | 25 - 30 | 1000 | α-Al₂O₃ |
| 2. Mikrofiltrations-Schicht (MF) | Zwischenschicht | 25-30 | 200 | α-Al₂O₃ |
| 3. Mikrofiltrations-Schicht (MF) | Zwischenschicht | 25-30 | 60 | α-Al₂O₃ |
| Ultrafiltrations-Schicht (UF) | Gel-Schicht | 3-4 | 5 | γ-Al₂O₃ |

Die keramische Membran wird bei 500 °C in Luft über 24 h calciniert und danach über 24 h im Exsiccator bei Raumtemperatur einer gesättigten Wasserdampfatmosphäre ausgesetzt. Die γ-Al₂O₃-Schicht der scheibenförmigen Flachmembran mit 18 mm Durchmesser wird anschließend über 10 Minuten durch Beschichten mit einer Lösung aus TEOS/Ethanol = 1:1 behandelt. Überschüssige Lösung wird durch spin coating entfernt. Nach Abdunsten des Lösungsmittels Ethanol über 10 Minuten beträgt die Massezunahme der Flachmembran mit 18 mm Durchmesser ca. 10 Gew-%. Nun wird die TEOS- haltige Keramikscheibe zusammen mit 1,5 ml reinem TEOS in einen Autoklaven von 100 ml Volumen eingebracht. Die Keramikscheibe befindet sich in einem Gestell über dem flüssigen TEOS, d.h. steht nicht in direktem Kontakt mit der Flüssigkeit. Der Autoklav wird mit 10 °C pro Minute auf 250 °C aufgeheizt und bei dieser Temperatur 2 Stunden belassen. Nach dem Abkühlen und öffnen des Autoklaven wird gravimetrisch eine Gewichtszunahme der getrockneten Ausgangsmembran um ca. 2 Gew-% Siliciumoxid festgestellt. Die energiedispersive Röntgenspektroskopie (EDX) in Verbindung mit der Rasterelektronenmikroskopie (REM) zeigt (Fig. 1a), daß sich das abgeschiedene Siliciumoxid-Netzwerk gleichmäßig über die γ-Al₂O₃-Schicht der Membran verteilt hat. In Pervaporationsexperimenten von Gemischen aus Wasser und verschiedenen organischen Lösungsmitteln zeigt sich, daß aus diesen Gemischen mit hoher Selektivität und hoher Flußdichte das Wasser durch Pervaporation abgetrennt werden kann (Tab.2). Dieses hydrophile Trennverhalten der Membran beruht darauf, daß die ausgebildete Siliciumoxid-Schicht reich an SiOH-Gruppen ist.

### Beispiel 2

Eine keramische Flachmembran mit dem UF-Schichtaufbau wird erfindungsgemäß mit TEOS behandelt wie im Beispiel 1. Bei einer einmaligen TEOS-Autoklav-Behandlung jedoch über 8 h bei 250 °C tritt ein deutlich verminderter Fluß für die Moleküle DMB und SF₆ bei der 105 °C Permeation auf, was auf Poren von etwa 0,5 nm schließen läßt (Permselektivität gegen H₂ = 0,01). Die gleiche Membran ist auch in der Gaspermeation stark hydrophil, so beträgt die Permselektivität Wasser gegen H₂ = 540 (siehe Tabelle 1).

### Beispiel 3

Eine keramische Flachmembran mit dem UF-Schichtaufbau wird erfindungsgemäß mit TEOS behandelt wie im Beispiel 1. Wird die TEOS-Autoklaven-Behandlung bei 250 °C über 2 h einschließlich der Vorbehandlung 2x durchgeführt, so entstehen Poren von etwa 0,4 nm. Bei der Permeation bei 105 °C tritt ein starker Flußrückgang für Moleküle mit einem Durchmesser >0,4 nm wie n/i-Butan, SF₆ und DMB ein, während die Gase N₂, O₂, CH₄, CO₂, H₂ mit etwa 100-fach höheren Fluß permeieren. Die Permselektivität Wasser gegen H₂ beträgt 548. Diese Membran ist deshalb geeignet zur Gastrocknung und Gastrennung (siehe Tabelle 1).

### Beispiel 4

Ein 30 cm langes Keramikrohr von 10 mm Außen- und 7 mm Innendurchmesser wird erfindungsgemäß mit TEOS behandelt. Der asymmetrische Schichtaufbau des eingesetzten Keramikrohrs entspricht dem der in Beispiel 1 behandelten Flachmembran. Die γ-Al₂O₃-Trennschicht befindet sich auf der Innenseite des Rohres (der Funktionsseite), der grobporöse Grundkörper weist nach außen. Das Keramikrohr wird bei 500 °C in Luft über 24 h calciniert und danach über 24 h im Exsiccator bei Raumtemperatur einer gesättigten Wasserdampfatmosphäre ausgesetzt. Die im Inneren des Rohres befindliche γ-Al₂O₃-Schicht wird in Kontakt mit einer Lösung aus TEOS/Ethanol = 1:1 gebracht, indem das untere Rohr-ende der vertikal ausgerichteten Rohrmembran in die TEOS-Lösung taucht und durch äußeren Stickstoffdruck die TEOS-Lösung in das Rohr hineingedrückt wird. Nach 5 Minuten Kontaktzeit wird die TEOS-Lösung durch Belüften des Außenraumes abgelassen. Nach Abdunsten des Lösungsmittels Ethanol und einer Reaktionszeit über 10 Minuten beträgt die Massezunahme der Rohrmembran 0,9 g gleich 10 Gew-%. Nun wird die TEOS-haltige Rohrmembran zusammen mit 15 ml reinem TEOS in einen Autoklaven von 1000 ml Volumen eingebracht. Das Keramikrohr befindet sich in einem Gestell über dem flüssigen TEOS, d.h. es steht nicht in direktem Kontakt mit der Flüssigkeit. Der Autoklav wird mit 10 °C pro Minute auf 250 °C aufgeheizt und bei dieser Temperatur 2 Stunden belassen. Nach dem Abkühlen und öffnen des Autoklaven wird gravimetrisch eine Gewichtszunahme der getrockneten Ausgangsmembran um ca. 2 Gew-% SiO₂ festgestellt. Die energiedispersive Röntgenspektroskopie (EDX) in Verbindung mit der Rasterelektronenmikroskopie (REM) zeigt wie in Fig. la, daß sich das abgeschiedene Siliciumoxid-Netzwerk gleichmäßig über die γ-Al₂O₃-Schicht der Membran verteilt hat.

In Pervaporationsexperimenten von Gemischen aus Wasser und verschiedenen organischen Lösungsmitteln zeigt sich, daß aus diesen Gemischen mit hoher Selektivität und hoher Flußdichte das Wasser durch Pervaporation abgetrennt werden kann wie in Beispiel 1 in Tab.2 gezeigt ist.

**Tabelle 1**

| Flüsse und Permselektivitäten¹ der Gaspermeation bei 105°C an TEOS-modifizierten Membranen mit 0,4 und 0,5 nm - Poren | | | | | |
|---|---|---|---|---|---|
| | | TEOS Autoklavbehandlung 1 × 8 h bei 250°C, Poren ~ 0,5nm | | TEOS Autoklavbehandlung 2×2 h bei 250°C, Poren ~ 0,4nm | |
| Permeant | Molekül-durch-messer | Fluss [l(STP)/m² h bar] | PS _{x/H2} | Fluss [l(STP)/m² h bar] | PS _{x/H2} |
| H₂O | 0,26 | 8664 | 539,6 | 8713 | 548 |
| H₂ | 0,29 | 16,1 | 1 | 15,9 | 1 |
| CO₂ | 0,33 | 19,3 | 1,20 | 16,2 | 1,01 |
| CH₄ | 0,38 | 5,1 | 0,32 | 2,6 | 0,16 |
| N₂ | 0,36 | 2,6 | 0,16 | 1,8 | 0,11 |
| O₂ | 0,35 | 5,1 | 0,32 | 3,9 | 0,25 |
| n-C₄ | 0,43 | 2,3 | 0,14 | 0,049 | 0,003 |
| i-C₄ | 0,50 | 2,8 | 0,17 | 0,025 | 0,0015 |
| SF₆ | 0,55 | 0,25 | 0,016 | 0,016 | 0,001 |
| DMB^{∗} | 0,62 | 0,14 | 0,009 | 0,016 | 0,001 |

| | | | | | |
|---|---|---|---|---|---|
| ^{∗} DMB = 2,2 Dimethylbutan | | | | | |
| ¹ Die Permselektivität ist definiert als Quotient der Einzel-gas-Permeatflüsse. | | | | | |

**Tabelle 2**

| Trennfaktoren² und Flußraten aus Pervaporationsexperimenten von Gemischen aus Wasser und verschiedenen organischen Lösungsmitteln an einer Al₂O₃-Membran mit einem Siliciumoxid-Netzwerk | | | | |
|---|---|---|---|---|
| Gemisch Lösungsmittel (A)/Wasser (B) | Temperatur °C | Zusammensetzung A/B Vol % | Trennfaktor α_{Wasser/Organika} | Flussrate kg/m² h |
| Acetonitril - Wasser | 80 | 5/95 | 64 | 3,67 |
| | | 50/50 | 18 | 0,28 |
| | | 95/5 | 17 | 0,27 |
| Tetrahydrofuran - Wasser | 60 | 5/95 | 21 | 1,92 |
| | | 50/50 | 419 | 0,18 |
| | | 95/5 | 1275 | 0,09 |
| Isopropanol - Wasser | 80 | 5/95 | 183 | 4,16 |
| | | 50/50 | 886 | 1,35 |
| | | 95/ 5 | 13200 | 0,15 |
| Ethanol - Wasser | 25 | 5/95 | 72 | 0,08 |
| | | 50/50 | 2157 | 2,40 |
| | | 95/5 | 24 | 0,51 |
| Ethanol -Wasser | 80 | 5/95 | 2 | 2,48 |
| | | 50/50 | 522 | 4,86 |
| | | 95/ 5 | 42 | 0,90 |
| Dimethylsulfoxid - Wasser | 95 | 5/95 | 9 | 1,15 |
| | | 50/50 | 117 | 1,13 |
| | | 95/ 5 | 40 | 0,01 |
| Dimethylformamid- Wasser | 95 | 5/95 | 2 | 1,21 |
| | | 50/50 | 95 | 0,39 |
| | | 95/ 5 | 0,01 | 0,01 |
| Phenol - Wasser | 80 | 5/95 | 6,4 | 1,31 |

| | | | | |
|---|---|---|---|---|
| ² Der Trennfaktor ist definiert als α = (Pₒ:P_{w})/(Fₒ:F_{w}) worin Pₒ und P_{w} die mittleren Konzentrationen (Gew%) der organischen Lösung und Wasser im Permeat und Fₒ und F_{w} (Gew%) die Konzentrationen im Einsatzprodukt sind. | | | | |

Unter Bezugnahme auf Fig. la und 1b folgt aus dem Vergleich der unbehandelten und der mit TEOS behandelten Membran, daß es zu keiner zusätzlichen SiO₂-Schichtbildung auf der äußeren Oberfläche der Membran kommt.

Es ist zu erkennen, daß es über die gesamte γ-Al₂O₃-Schicht zu einer gleichmäßigen Einlagerung von Si gekommen ist. Dieser experimentelle Befund belegt, daß sich ein sehr gleichmäßiges Siliciumoxid-Netzwerk innerhalb der γ-Al₂O₃-Schicht ausgebildet hat. Das Trennverhalten der abgebildeten Membran geben Tabellen 1 und 2 wieder.

## Patentansprüche

1. Oxidkeramischer Körper mit ultrafeinen Poren, **gekennzeichnet durch** einen offenporigen, festen, oxidkeramischen Grundkörper mit asymmetrischem Schichtaufbau, auf der Funktionsseite mit den feinsten Poren in der Größe von 1 nm bis 20 nm in der oberflächennächsten Schicht, und ein gleichmäßig in den Poren der oberflächennächsten Schicht verteiltes metalloxidhaltiges Material, das die Poren auf Porengrößen im Bereich von 0,3 bis 0,8 nm einengt und die Porenoberflächen funktionalisiert.

2. Körper nach Anspruch 1, **dadurch gekennzeichnet, daß** der Grundkörper aus einem keramischen Material auf Basis von Aluminiumoxid, Siliciumdioxid, Zirkoniumoxid, Titaniumoxid oder Gemischen davon besteht.

3. Körper nach Anspruch 1, **dadurch gekennzeichnet, daß** das metalloxidhaltige Material aus den Oxiden von Aluminium, Titanium, Silicium, Germanium oder Zirkonium besteht.

4. Körper nach Anspruch 3, **dadurch gekennzeichnet, daß** das metalloxidhaltige Material ein Siliciumoxid-Netzwerk ist.

5. Körper nach Anspruch 1, **dadurch gekennzeichnet, daß** der Grundkörper ein flacher Körper, ein Rohr oder ein Multikanalrohr ist, bei dem die Funktionsseite jeweils die feinste Schicht des asymmetrischen Schichtaufbaus aufweist.

6. Körper nach Anspruch 1, **dadurch gekennzeichnet, daß** die Porengröße im Oberflächenbereich der oberflächennächsten Schicht auf 0,4 - 0,5 nm eingeengt ist.

7. Verfahren zur Herstellung eines oxidkeramischen Körpers mit ultrafeinen Poren, **dadurch gekennzeichnet, daß** man einen offenporigen, festen, oxidkeramischen Grundkörper mit asymmetrischem Schichtaufbau, der auf der Funktionsseite die feinsten Poren aufweist mit Porengrößen von 1 nm bis 20 nm in der oberflächennächsten Schicht, und der bei Raumtemperatur wassergesättigt ist, in Gegenwart einer flüssigen oder gasförmigen metallorganischen Verbindung, ausgewählt unter den organischen Verbindungen der Metalle Al, Ti, Ge, Zr und Si, in einem Autoklaven bei Temperaturen im Bereich von 150 bis 450 °C und autogenem Druck über einen Zeitraum von 1 bis 18 Stunden behandelt.

8. Verfahren nach Anspruch 7, **dadurch gekennzeichnet, daß** die flüssige oder gasförmige metallorganische Verbindung ein Alkoholat von Al, Ti, Ge oder Zr oder ein Tetraalkylorthosilicat ist.

9. Verfahren nach Anspruch 8, **dadurch gekennzeichnet, daß** die flüssige metallorganische Verbindung Tetraethylorthosilicat ist.

10. Verfahren nach Anspruch 7, **dadurch gekennzeichnet, daß** die Autoklavbehandlung zwei- oder dreifach erfolgt.

11. Verfahren nach Anspruch 7, **dadurch gekennzeichnet, daß** der Grundkörper nach der Wassersättigung wenigstens auf der Seite mit den feinsten Poren mit einer Lösung der metallorganischen Verbindung in Kontakt gebracht wird.

12. Verfahren nach Anspruch 7, **dadurch gekennzeichnet, daß** während der Autoklavbehandlung die flüssige metallorganische Verbindung nicht in direktem Kontakt mit dem oxidkeramischen Grundkörper steht.

13. Verwendung eines oxidkeramischen Körpers nach Anspruch 1 zur molekularen Trennung flüssiger und gasförmiger Gemische durch Permeation und Pervaporation.

## Claims

1. An oxide-ceramic body having ultra-fine pores comprising an open-pore, solid, oxide-ceramic base body with an asymmetric layer structure whose finest pores measuring between 1 nm and 20 nm are to be found in the uppermost layer on the functional side thereof, and a material containing metal oxide which is uniformly distributed in the pores of said uppermost layer and which reduces the size of said pores to between 0.3 nm and 0.8 nm and functionalizes the pore surfaces.

2. A body according to Claim 1, wherein said base body consists of a ceramic material based on aluminium oxide, silicon dioxide, zirconium oxide, titanium oxide or mixtures thereof.

3. A body according to Claim 1, wherein said material containing metal oxide consists of the oxides of aluminium, titanium, silicon, germanium or zirconium.

4. A body according to Claim 3, wherein said material containing metal oxide is a silicon dioxide network.

5. A body according to Claim 1, wherein said base body is a flat body, a tube or a multi-channel tube in which the finest layer of the asymmetric layer structure is always situated on the functional side thereof.

6. A body according to Claim 1, wherein the size of those pores situated on the uppermost layer's surface is reduced to 0.4-0.5 nm.

7. A method for producing an oxide-ceramic body having ultra-fine pores comprising the steps of water-saturating an open-pore, solid, oxide-ceramic base body having an asymmetric layer structure and whose finest pores measuring between 1 nm and 20 nm are to be found in the uppermost layer on the functional side thereof at room temperature and treating said body in an autoclave in the presence of a liquid or gaseous metal-organic compound selected from among the organic compounds of the metals Al, Ti, Ge, Zr and Si at temperatures ranging between 150° C and 450° C and at autogenous pressure for 1-18 hours.

8. A method according to Claim 7, wherein said liquid or gaseous metal-organic compound is an alkoxide of Al, Ti, Ge or Zr or a tetraalkylorthosilicate.

9. A method according to Claim 8, wherein said liquid metal-organic compound is tetraethylorthosilicate.

10. A method according to Claim 7, wherein autoclaving is done two or three times.

11. A method according to Claim 7, wherein said base body is brought into contact with a solution of the metal-organic compound at least on its finest-pore side once it has been saturated with water.

12. A method according to Claim 7, wherein there is no direct contact between the liquid metal-organic compound and the oxide-ceramic base body during autoclaving.

13. The use of an oxide-ceramic body according to Claim 1 for the molecular separation of liquid and gaseous mixtures by means of permeation and pervaporation.

## Revendications

1. Corps en céramique d'oxyde présentant des pores ultrafins selon la présente invention, **caractérisé par** un corps de base en céramique d'oxyde solide à pores ouverts présentant une structure à couches asymétriques sur le côté fonctionnel présentant des pores plus fins présentant une dimension de 1 à 20 nm dans la couche la plus proche de la surface, et un matériau contenant de l'oxyde de métal réparti de façon homogène dans les pores de la couche la plus proche de la surface, lequel matériau rétrécit les pores à une grosseur de pores s'inscrivant dans une plage de 0,3 à 0,8 nm et rend fonctionnelle la surface des pores.

2. Corps selon la revendication 1, **caractérisé en ce que** le corps de base se compose d'un matériau en céramique sur la base d'oxyde d'aluminium, de dioxyde de silice, d'oxyde de zirconium, d'oxyde de titane ou des mélanges d'oxydes correspondants.

3. Corps selon la revendication 1, **caractérisé en ce que** le matériau contenant de l'oxyde de métal se compose des oxydes d'aluminium, de titane, de silice, de germanium et de zirconium.

4. Corps selon la revendication 3, **caractérisé en ce que** le matériau contenant l'oxyde de métal est un réseau d'oxyde de silice.

5. Corps selon la revendication 1, **caractérisé en ce que** le corps de base en céramique d'oxyde est un corps plat, un tuyau ou un tuyau à canaux multiples pour lequel le côté fonctionnel présente à chaque fois la couche la plus fine de la structure en couches asymétriques.

6. Corps selon la revendication 1, **caractérisé en ce que** la taille de pores dans une plage de surface de la couche la plus proche de la surface est limitée entre 0,4 et 0,5 nm.

7. Corps pour la fabrication d'un corps en céramique d'oxyde présentant des pores fins, **caractérisé en ce que** qu'on traite un corps de base en céramique d'oxyde à pores ouverts solide, présentant une structure à couches asymétriques laquelle structure présente sur son côté fonctionnel les pores les plus fins avec une dimension de pores de 1 à 20 nm dans la couche la plus proche de la surface et qui est saturée d'un point de vue hydrique à température ambiante en présence d'un composé métallo-organique liquide ou gazeux sélectionné parmi les composés organiques de métal Al, Ti, Ge, Zr et Si, au sein d'un autoclave à des températures situées dans une plage de 150 à 450°C et sous une pression autogène supérieure à un intervalle de temps de 1 à 18 heures.

8. Procédé selon la revendication 7, **caractérisé en ce que** le composé métallo-organique en phase gazeuse ou liquide est un alcoolate de Al, Ti, Ge ou Zr ou un tétraalkylorthosilicate.

9. Procédé selon la revendication 8, **caractérisé en ce que** le composé métallo-organique liquide est un tétraéthylorthosilicate.

10. Procédé selon la revendication 7, **caractérisé en ce que**, le traitement autoclave survient en deux ou trois fois.

11. Procédé selon la revendication 7, **caractérisé en ce que**, le corps de base est mis en contact après saturation hydrique au moins sur le côté présentant les pores les plus fins avec une solution de composés métallo-organiques.

12. Procédé selon la revendication 7, **caractérisé en ce que**, lors du traitement en autoclave le composé métallo-organique liquide n'entre pas directement en contact avec le corps de base en céramique d'oxyde.

13. Utilisation d'un corps en céramique d'oxyde selon la revendication 1 pour une séparation moléculaire de mélange liquide ou sous forme gazeuse par perméation et pervaporation.
